# EUROPÄISCHE PATENTSCHRIFT

(11) **EP 3 102 847 B1**
(45) Veröffentlichungstag und Bekanntmachung des Hinweises auf die Patenterteilung: **26.12.2018**
(21) Anmeldenummer: 15703915.7
(22) Anmeldetag: 30.01.2015
(51) Int. Cl.: B60B 15/28, B62D 49/06, F16F 15/32, F16F 15/34

(54) **RADZUSATZGEWICHT**
BALLAST WEIGHT FOR A WHEEL
POIDS LEST POUR UNE ROUE

(30) Priorität: 05.02.2014 DE 102014202074
(43) Veröffentlichungstag der Anmeldung: 14.12.2016
(73) Patentinhaber: Deere & Company, Moline, IL 61265 (US)
(72) Erfinder: RÖCKL, Michael, 68239 Mannheim (DE); JADHAV, Dipak, Kolhapur 416121 (IN)
(74) Vertreter: Reichert, Christian
(86) Internationale Anmeldenummer: PCT/EP2015/051932
(87) Internationale Veröffentlichungsnummer: WO 2015/117896

(56) Entgegenhaltungen:
- EP-A1- 2 676 807
- DE-B- 1 279 496

## Beschreibung

Die Erfindung betrifft ein Radzusatzgewicht zur Ballastierung einer Antriebsachse einer landwirtschaftlichen Arbeitsmaschine, umfassend eine mit der Antriebsachse zentrisch verbindbare und als Adapterelement fungierende erste Belastungsscheibe, zumindest eine mit der ersten Belastungsscheibe bedarfsweise verbindbare zweite Belastungsscheibe, wobei die erste Belastungsscheibe eine konische Anlagefläche zur Vorpositionierung der zweiten gegenüber der ersten Belastungsscheibe aufweist und wobei die erste und die zweite Belastungsscheibe zur gegenseitigen Zentrierung auf einander zugewandten Stirnflächen in einem verbundenen Zustand der Belastungsscheiben miteinander in Eingriff stehende Codierungsausformungen ausbilden.

Die DE 1 279 496, als nächstliegender Stand der Technik erkannt, zeigt ein Zusatzgewicht zur Befestigung an der Radscheibe von Fahrzeugrädern. Vorgesehen ist eine Zwischenscheibe zur Befestigung an der Radschüssel. Die Zwischenscheibe bildet eine Außenkonusfläche aus, zur Aufnahme einer Gewichtsscheibe, die ihrerseits eine Innenkonusfläche ausbildet. Ein unbeabsichtigtes Drehen der Gewichtsscheibe gegenüber der Zwischenscheibe wird durch eine Paarung aus Nocken und Ausnehmung, die jeweils auf der Zwischenscheibe und der Gewichtsscheibe angeordnet sind, verhindert. Über eine zentrisch angeordnete Schraube wird die Gewichtsscheibe gegenüber der Zwischenscheibe befestigt. Trotz der konischen Aufnahme der beiden Scheiben zueinander, besteht die Möglichkeit, dass die Gewichtsscheibe exzentrisch gegenüber der Zwischenscheibe befestigt wird, mit der Folge einer erhöhten Radunwucht, welche insbesondere bei erhöhter Fahrgeschwindigkeit, beispielsweise bei Transportgeschwindigkeit eines landwirtschaftlichen Schleppers, zu Komforteinbußen führt.

Die Aufgabe der vorliegenden Erfindung besteht darin, die vorgenannten Nachteile zu überwinden.

Die Aufgabe wird gelöst durch ein Radzusatzgewicht zur Ballastierung einer Antriebsachse einer landwirtschaftlichen Arbeitsmaschine, umfassend eine mit der Antriebsachse zentrisch verbindbare und als Adapterelement fungierende erste Belastungsscheibe, zumindest eine mit der ersten Belastungsscheibe

bare zweite Belastungsscheibe, wobei die erste Belastungsscheibe eine konische Anlagefläche zur Vorpositionierung der zweiten gegenüber der ersten Belastungsscheibe aufweist und wobei die erste und die zweite Belastungsscheibe zur gegenseitigen Zentrierung auf einander zugewandten Stirnflächen in einem verbundenen Zustand der Belastungsscheiben miteinander in Eingriff stehende Codierungsausformungen ausbilden, wobei zumindest eine der Stirnflächen zumindest einer der Belastungsscheiben Distanzdome ausbildet, die in dem verbundenen Zustand eine Stirnfläche der jeweils anderen Belastungsscheibe kontaktieren, um die erste und die zweite Belastungsscheibe in axialer Richtung gegeneinander zu positionieren.

Durch die erfindungsgemäße Ausgestaltung des Radzusatzgewichts ist gewährleistet, dass während der Montage der zweiten Belastungsscheibe an der ersten Belastungsscheibe, die gegenüber der Radschüssel als Adapterelement fungiert, eine Vorpositionierung über den konischen Absatz der ersten Belastungsscheibe erfolgen kann. Bevorzugt weist die zweite Belastungsscheibe einen gegenkonischen Absatz auf, der zur Anlage des konischen Absatzes der ersten Belastungsscheibe dient. Im weiteren Verlauf der Montage der zweiten Belastungsscheibe erfolgt über die Codierungsausformungen eine Zentrierung der zweiten Belastungsscheibe in radialer Richtung gegenüber der ersten Belastungsscheibe. Die Montage der zweiten Belastungsscheibe ist beendet, wenn über die Anlage der Distanzdome eine Positionierung beziehungsweise Fixierung der ersten Belastungsscheibe gegenüber der zweiten Belastungsscheibe erfolgt, so dass hierdurch ein Taumeln der Belastungsscheibe bei Rotation vermieden wird. In einer einfachsten Ausführung des erfindungsgemäßen Radzusatzgewichts sind auf einer Stirnfläche einer der beiden Belastungsscheiben Distanzdome, bevorzugt drei Distanzdome, vorgesehen. Auf einer Stirnfläche der jeweils anderen Belastungsscheibe sind zur Anlage der Distanzdome Anlageflächen ausgebildet. Grundsätzlich bieten die Endflächen der Distanzdome die Möglichkeit bearbeitet zu werden, so dass hierüber eine passgenaue und taumelfreie Positionierung der beiden Belastungsscheiben in axialer Richtung zueinander gewährleistet werden kann.

Bevorzugt bilden die erste und die zweite Belastungsscheibe auf
Stirnflächen Distanzdome aus, über die sich die Belastungsscheiben in dem verbundenen Zustand kontaktieren. Hierdurch ergibt sich insgesamt eine Vereinfachung bei der Fertigung als auch bei der Montage der Belastungsscheiben.

Bevorzugt bilden die Codierungsausformungen in den Stirnflächen eine dreieckige Form aus. Durch die dreieckige Form ist sichergestellt, dass sich die Codierungsausformungen auf den sich gegenüberliegenden Stirnflächen der Belastungsscheiben bei der Montage einfach finden und ineinanderfügen.

Bevorzugt sind über den Umfang der Stirnfläche einer Belastungsscheibe drei Codierungsausformungen vorgesehen sind. Hierdurch ist gewährleistet, dass eine möglichst genaue Positionierung der zwei Belastungsscheiben in radialer Richtung zueinander erfolgen kann.

Bevorzugt sind die Codierungsausformungen auf der Stirnfläche einer Belastungsscheibe teilweise als Ausnehmungen und teilweise als Erhebungen gestaltet. Hierdurch ist gewährleistet, dass zwei Belastungsscheiben lediglich in einer Umfangsposition zueinander montiert werden können.

Bevorzugt sind die Distanzdome von einer Durchgangsbohrung durchsetzt. Hierdurch wird die Möglichkeit vorgehalten, durch die Durchgangsbohrungen hindurch Befestigungsmittel beispielweise in Form von Gewindestiften zu führen, um somit die Belastungsscheiben gegeneinander zu halten.

Bevorzugt weist die erste Belastungsscheibe einen Befestigungslochkreis zur Befestigung an einem Radflansch der Antriebsachse auf. Hierdurch ist gewährleistet, dass das Radzusatzgewicht nicht mittelbar über die Radschüssel, sondern unmittelbar über den Radflansch mit der Antriebsachse verbunden ist.

Ein bevorzugtes Ausführungsbeispiel der erfindungsgemäßen Halterungsanordnung wird anhand der nachfolgenden Figuren beschrieben. Hierin zeigen
- Figur 1: ein landwirtschaftliches Arbeitsgerät;
- Figur 2: Teilansicht eines Querschnitts durch ein Rad eines Arbeitsgeräts mit einem erfindungsgemäßen Radzusatzgewicht;
- Figur 3: eine Vorderseite einer erfindungsgemäßen ersten Belastungsscheibe;
- Figur 4: eine Rückseite einer erfindungsgemäßen ersten Belastungsscheibe;
- Figur 5: eine Vorderseite einer erfindungsgemäßen zweiten Belastungsscheibe;
- Figur 6: eine Rückseite einer erfindungsgemäßen zweiten Belastungsscheibe;
- Figur 7: eine Axialansicht eines erfindungsgemäßen Radzusatzgewichts angeordnet in dem Rad eines landwirtschaftlichen Arbeitsgeräts;
- Figur 8: eines Querschnitts durch ein Rad eines landwirtschaftlichen Arbeitsgeräts mit einem erfindungsgemäßen Radzusatzgewicht.

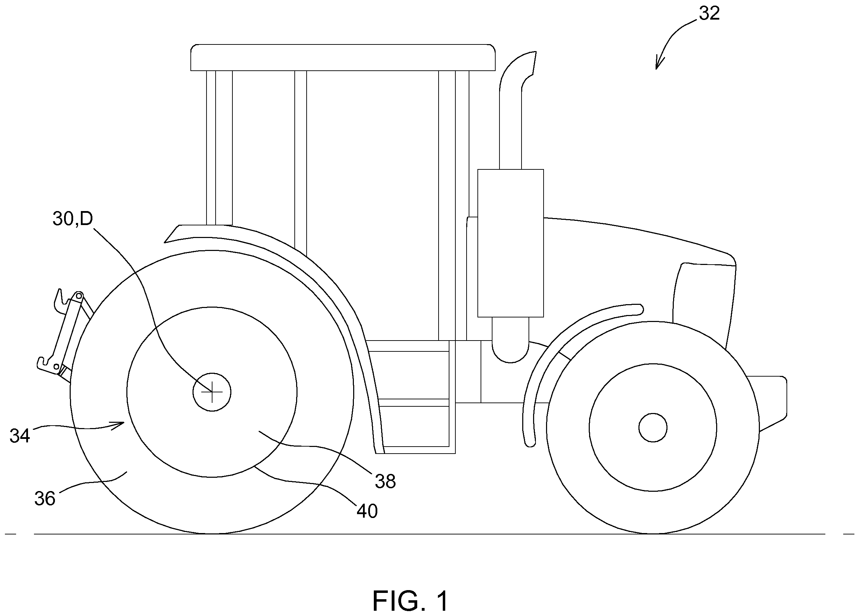

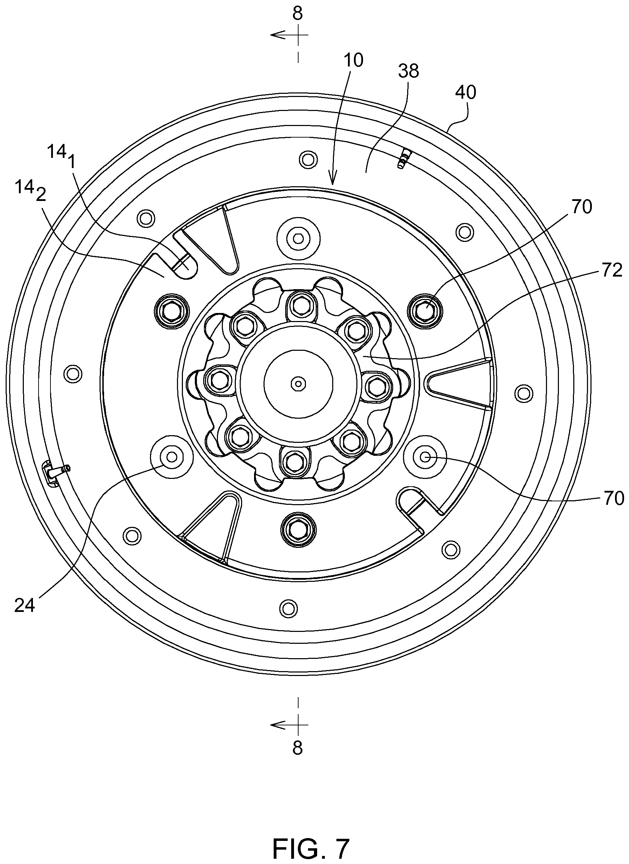

Die Figur 1 zeigt eine landwirtschaftliche Arbeitsmaschine 32 in Gestalt eines Schleppers mit einer Antriebsachse 30, die vorliegend die rückwärtige Achse der Arbeitsmaschine 32 ist. Die Antriebsachse 30 kann um eine Drehachse D angetrieben werden. Die Antriebsachse 30 trägt zu beiden Seiten ein Rad 34 mit einem darauf aufgezogenen Reifen 36. Das Rad 34 umfasst eine Radschüssel 38 und eine daran angebrachte Felge 40. Innerhalb der Felge 40 ist ein Radzusatzgewicht 10, bestehend aus einer ersten Belastungsscheibe 12, einer zweiten Belastungsscheibe 14 und gegebenenfalls weiteren Belastungsscheibe, gehalten, wie dies als Axialansicht in Figur 7 gezeigt ist und im Folgenden näher beschrieben wird.

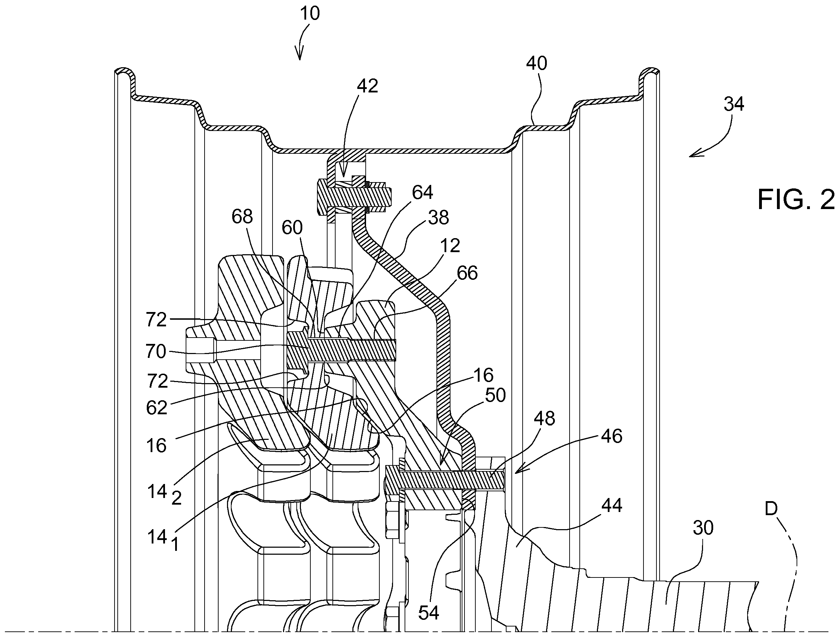

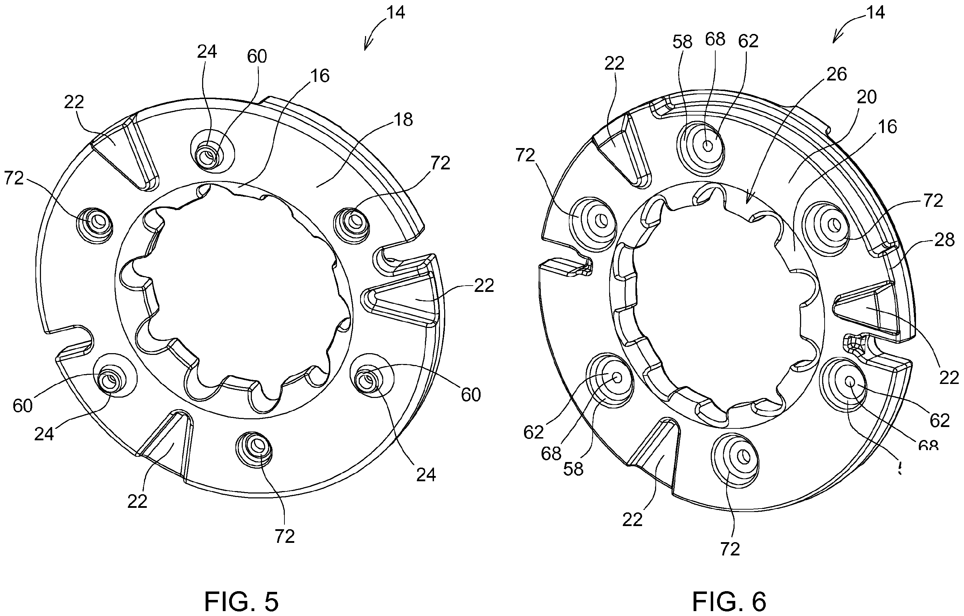

Die Figur 2 und die Figur 5 zeigen einen Querschnitt durch die Radschüssel 38 mit der über einen Verschraubungskranz 42 daran gehaltenen Felge 40. Desweiteren ist ein Radbefestigungsflansch 44 gezeigt. Auf eine Darstellung eines den Radbefestigungsflansch 44 umgebenden Gehäuses, welches ein Getriebegehäuse oder ein Differentialgehäuse sein kann, wird verzichtet. Der Radbefestigungsflansch 44 umfasst einen Befestigungslochkreis 46, in den Radmuttern 48 parallel zu der Drehachse D einschraubbar sind, um das Rad 34 an dem Radbefestigungsflansch 44 zu halten.

Auf der Figur 2 und der Figur 5 ist weiterhin zu erkennen, dass über die Radmuttern 48 eine erste Belastungsscheibe 12 an dem Radbefestigungsflansch 44 gehalten ist. Hierzu weist die erste Belastungsscheibe 12 einen Befestigungslochkreis 50 auf, der dem Befestigungslochkreis 46 des Radbefestigungsflanschs 44 in Anzahl der Bohrungen und im Durchmesser übereinstimmt. Eine Zentrierung der ersten Belastungsscheibe 12 gegenüber dem Radbefestigungsflansch 44 erfolgt dadurch, dass der Befestigungslochkreis 50 der ersten Belastungsscheibe 12 konzentrisch zu dieser angeordnet ist und vorzugsweise während des Fertigungsprozesses ein Auswuchten der ersten Belastungsscheibe 12 bezüglich des Befestigungslochkreises 50 erfolgt.

An der ersten Belastungsscheibe 12 ist zentriert eine zweite Belastungsscheibe 14₁ befestigt und an der zweiten Belastungsscheibe 14₁ ist eine dritte Belastungsscheibe 14₂ befestigt. Hierbei fungiert die erste Belastungsscheibe 12 als Adapterscheibe des Radzusatzgewichts 10 gegenüber dem Rad 34. Die zweite Belastungsscheibe 14₁ und die dritte Belastungsscheibe 14₂ können identisch gestaltet sein, wie dies vorliegend der Fall ist. Für die Zwecke dieser Beschreibung wird davon ausgegangen, dass im montierten Zustand eine Rückseite der ersten Belastungsscheibe 12 gegen die Radschüssel 38 gerichtet ist und eine Vorderseite der ersten Belastungsscheibe 14 gegen eine Rückseite der zweiten Belastungsscheibe 14₁ gerichtet ist, so dass wiederum eine Vorderseite der zweiten Belastungsscheibe 14₁ gegen eine Rückseite der dritten Belastungsscheibe 14₂ gerichtet ist. Die Montage weiterer Belastungsscheiben 14 kann vorgesehen sein, ist aber nicht dargestellt.

Während die Positionierung und die Zentrierung der ersten Belastungsscheibe 12 gegenüber dem Radbefestigungsflansch 44 wie oben beschrieben mittels der Radmuttern 48 und den Befestigungslochkreisen 46, 50 erfolgt, erfolgt die gegenseitige Positionierung und Zentrierung der Belastungsscheiben 12, 14 zunächst über das Zusammenspiel von konischen Anlageflächen 16 für eine Vorpositionierung während der Montage, danach über Codierungsausformungen 22 für die Positionierung in radialer Richtung beziehungsweise Zentrierung und schließlich über Distanzdome 24 für die Positionierung in axialer Richtung.

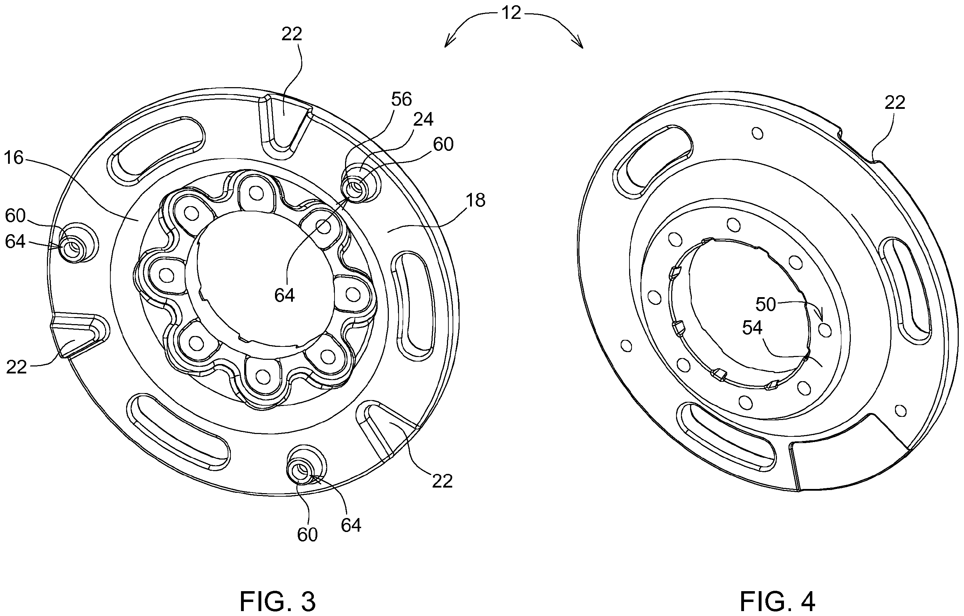

Zur Vorpositionierung in radialer Richtung bei der Montage der zweiten Belastungsscheibe 14₁ gegenüber der ersten Belastungsscheibe 12 und im weiteren Verlauf der Montage der dritten Belastungsscheibe 14₂ gegenüber der zweiten Belastungsscheibe 14₁, weisen die Belastungsscheibe 12 auf der Vorderseite, siehe Figur 3, und die Belastungsscheiben 14₁, 14₂ auf der Vorderseite, siehe Figur 5, und Rückseite, siehe Figur 6, konische Anlageflächen 16 aus. Wie in der Figur 2 zu erkennen ist, kann vorgesehen sein, dass sich in einem montierten Zustand der ersten und der zweiten Belastungsscheibe 12, 14₁ die konischen Anlageflächen 16 nicht kontaktieren.

Zur Positionierung in radialer Richtung beziehungsweise Zentrierung bei der Montage der Belastungsscheiben 12, 14₁, 14₂ weisen die Belastungsscheibe 12 auf der Stirnfläche 18 der Vorderseite, siehe Figur 3, und die Belastungsscheiben 14₁, 14₂ auf der Stirnfläche 18 der Vorderseite, siehe Figur 4, und der Stirnfläche 20 der Rückseite, siehe Figur 5, Codierungsausformungen 22 aus. Bevorzugt sind drei Codierungsausformungen 22 auf den Vorderseiten beziehungsweise Rückseiten vorgesehen. Bei den bevorzugt drei Codierungsausformungen 22 auf den Vorderseiten beschreiben zwei Codierungsausformungen 22 Vertiefungen in die Stirnfläche 18 hinein und die dritte Codierungsausformung 22 eine Erhebungen über die Stirnfläche 20 hinaus. Die Codierungsausformungen 22 sind bevorzugt dreieckig ausgeformt. Hierbei sind die dreieckigen Codierungsausformungen 22 bevorzugt als gleichschenklige Dreiecke ausgeführt und derart auf der Stirnfläche 18 orientiert, dass der Winkel, der von den zwei gleichlangen Schenkeln eingeschlossen wird, in radialer Richtung beziehungsweise zur Mitte der Belastungsscheibe 12, 14₁, 14₂ zeigt. Weiterhin ist bevorzugt, dass der Schenkel des Dreiecks, der von den Basiswinkeln eingeschlossen wird, mit dem äußeren Rand der Belastungsscheibe 12, 14₁, 14₂ zusammenfällt, so dass die Codierungsausformungen 22 bis in ihren radial äußeren Randbereich der Stirnflächen 18, 20 reichen. Durch die Codierungsausformungen 22 ist gewährleistet, dass die Belastungsscheiben 12, 14 einerseits nur Rückseite an Vorderseite und anderseits nur in einer definierten Umfangsposition gegeneinander montiert werden können. Weiterhin greifen in dem montierten Zustand der Belastungsscheiben 12, 14₁, 14₂ die komplementären Codierungsausformungen 22 formschlüssig ineinander.

Zur Positionierung in axialer Richtung bei der Montage der Belastungsscheiben 12, 14₁, 14₂ weisen die Belastungsscheiben 14₁, 14₂ auf der Stirnfläche 18 der Vorderseite Distanzdome 24 auf. Bevorzugt sind drei Distanzdome 24 auf den Vorderseiten der Belastungsscheiben 12, 14₁, 14₂ vorgesehen. Bei den Distanzdomen 24 handelt es sich um kegelförmige oder konusförmige Erhebungen über die Stirnfläche 18 hinaus. Die Distanzdome 24 sind in axialer Richtung von Durchgangsbohrungen 64 durchsetzt. In den Durchgangsbohrungen 64 ist ein Gewindeabschnitt 66 ausgebildet.

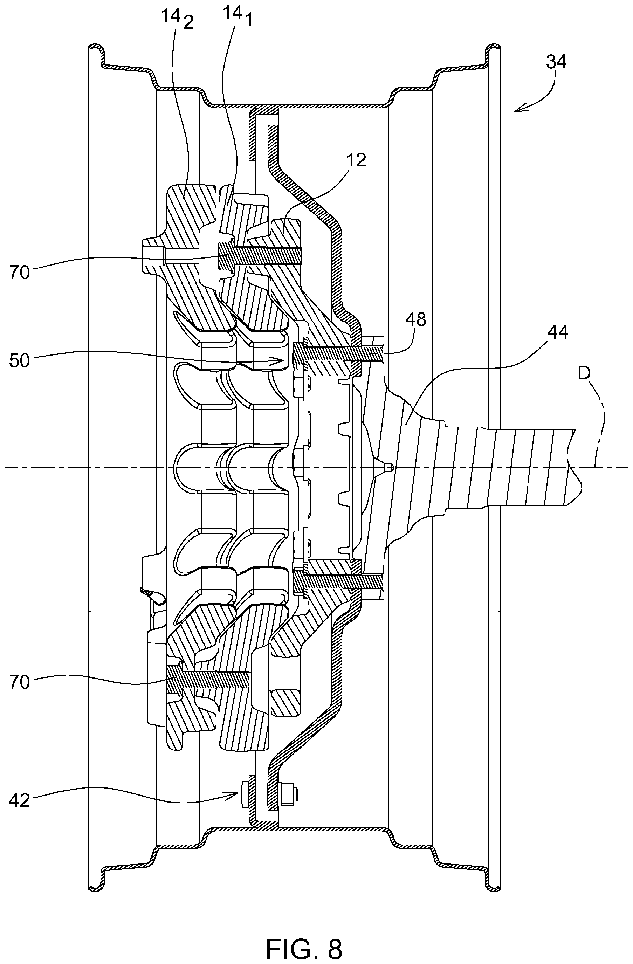

Als Gegenstück zu den Distanzdomen 24 weisen die Belastungsscheiben 14₁, 14₂ auf der jeweiligen Rückseite, siehe Figur 6, erste Ausnehmungen 58 auf, wobei die Ausnehmungen 58 wie vorliegend rund ausgebildet sein können. Die Ausnehmungen 58 sind in axialer Richtung von Durchgangsbohrungen 68 durchsetzt. Die ersten Ausnehmungen 58 dienen dazu, im montierten Zustand der Belastungsscheiben 12, 14 die Distanzdome 24 der ersten Belastungsscheibe 12 aufzunehmen, wie in den Figuren 2 und 8 zu erkennen ist.

Im montierten Zustand der Belastungsscheiben 12, 14 kommt eine Anlagefläche 60 der Distanzdome 24 auf einer Grundfläche 62 der ersten Ausnehmungen 58 zur Anlage, sodass hierüber eine eindeutige Positionierung der beiden Belastungsscheiben 12, 14 in axialer Richtung gegeneinander erfolgt. In der Figur 6 sind diese drei ersten Ausnehmungen 58 zur Aufnahme der Distanzdome 24 in montierten Zustand im Gegenuhrzeigersinn benachbart neben den Codierungsausformungen 22 angeordnet. Wie in den Figuren 2 und 8 zu erkennen ist, erfolgt eine Montage der ersten und zweiten Belastungsscheibe 12, 14₁ über eine Befestigungsschraube 70, die durch die Durchgangsbohrung 68 der zweiten Belastungsscheibe 14 hindurch in den Gewindeabschnitt 66 der Durchgangsbohrung 64 der ersten Belastungsscheibe 12 fasst. In der Figur 2 und der Figur 8 sind zweite Ausnehmungen 72 in der Stirnfläche 18 der Vorderseite der Belastungsscheibe 14 zu erkennen, in denen der Kopf der Befestigungsschraube 70 im verschraubten Zustand zumindest teilweise versenkt ist, wie dies die Figuren 2 und 8 zeigen. Weiterhin sind dritte Ausnehmungen 74 auf der Stirnfläche 20 der Rückseite der Belastungsscheibe 14 angeordnet, die bei Montage einer dritten Belastungsscheibe 14₂, wie in der Figur 2 zu erkennen, zur Aufnahme des über die Stirnfläche 18 hinausragenden Kopf der Befestigungsschraube 70 dient.

### Bezugszeichenliste

- 10: Radzusatzgewicht
- 12: Belastungsscheibe
- 14: Belastungsscheibe
- 16: konische Anlagefläche
- 18: Stirnfläche
- 20: Stirnfläche
- 22: Codierungsausformung
- 24: Distanzdom
- 30: Antriebsachse
- 32: landwirtschaftliche Arbeitsmaschine
- 34: Rad
- 36: Reifen
- 38: Radschüssel
- 40: Felge
- 42: Verschraubungskranz
- 44: Radbefestigungsflansch
- 46: Befestigungslochkreis
- 48: Radmutter
- 50: Befestigungslochkreis
- 52: Ausnehmung
- 54: Anlagefläche
- 58: Ausnehmung
- 60: Anlagefläche
- 62: Grundfläche
- 64: Durchgangsbohrung
- 66: Gewindeabschnitt
- 68: Durchgangsbohrung
- 70: Befestigungsschraube
- 72: Ausnehmung
- 74: Ausnehmung

## Patentansprüche

1. Radzusatzgewicht (10) zur Ballastierung einer Antriebsachse (30) einer landwirtschaftlichen Arbeitsmaschine (32), umfassend
eine mit der Antriebsachse (30) zentrisch verbindbare und als Adapterelement fungierende erste Belastungsscheibe (12),
zumindest eine mit der ersten Belastungsscheibe (12) bedarfsweise verbindbare zweite Belastungsscheibe (14),
wobei die erste Belastungsscheibe (12) eine konische Anlagefläche (16) zur Vorpositionierung der zweiten Belastungsscheibe (14) gegenüber der ersten Belastungsscheibe (16) aufweist und
wobei die erste und die zweite Belastungsscheibe (12, 14) zur gegenseitigen Zentrierung auf einander zugewandten Stirnflächen (18, 20) in einem verbundenen Zustand der Belastungsscheiben (12, 14) miteinander in Eingriff stehende Codierungsausformungen (22) ausbilden,
**dadurch gekennzeichnet,**
**dass** zumindest eine der Stirnflächen (18, 20) zumindest einer der Belastungsscheiben (12, 14) Distanzdome (24) ausbildet, die in dem verbundenen Zustand eine Stirnfläche (20, 18) der jeweils anderen Belastungsscheibe (14, 12) kontaktieren, um die erste und die zweite Belastungsscheibe (12, 14) in axialer Richtung gegeneinander zu positionieren.

2. Radzusatzgewicht nach Anspruch 1, **dadurch gekennzeichnet, dass** die erste und die zweite Belastungsscheibe auf zumindest einer der Stirnflächen Distanzdome ausbilden, über die sich die Belastungsscheiben in dem verbundenen Zustand kontaktieren.

3. Radzusatzgewicht nach einem der Ansprüche 1 bis 2, dad net, dass die Codierungsausformungen in den Stirnflächen eine dreieckige Form ausbilden.

4. Radzusatzgewicht nach einem der Ansprüche 1 bis 3, **dadurch gekennzeichnet, dass** über den Umfang der Stirnfläche einer Belastungsscheibe drei Codierungsausformungen vorgesehen sind.

5. Radzusatzgewicht nach einem der Ansprüche 1 bis 4, **dadurch gekennzeichnet, dass** die Codierungsausformungen auf der Stirnfläche einer Belastungsscheibe teilweise als Ausnehmungen und teilweise als Erhebungen gestaltet sind.

6. Radzusatzgewicht nach einem der Ansprüche 1 bis 5, **dadurch gekennzeichnet, dass** die Distanzdome von einer Durchgangsbohrung durchsetzt sind.

7. Radzusatzgewicht nach einem der Ansprüche 1 bis 6, **dadurch gekennzeichnet, dass** die erste Belastungsscheibe einen Befestigungslochkreis zur Befestigung an einem Radflansch der Antriebsachse aufweist.

## Claims

1. Additional weight (10) for a wheel for ballasting a drive axle (30) of an agricultural working machine (32), comprising
a first loading disk (12) which can be centrally connected to the drive axle (30) and which acts as an adapter element,
at least one second loading disk (14) which can be connected to the first loading disk (12), if necessary, wherein the first loading disk (12) has a conical abutment face (16) for pre-positioning the second loading disk (14) relative to the first loading disk (16) and wherein the first and the second loading disks (12, 14) form encoding formations (22) which are for mutual centering on end faces (18, 20) which face each other and which are in engagement with each other in a connected state of the loading disks (12, 14),
**characterized in that**
at least one of the end faces (18, 20) of at least one of the loading disks (12, 14) forms spacer domes (24) which in the connected state contact an end face (20, 18) of the other loading disk (14, 12) in order to position the first and the second loading disks (12, 14) with respect to each other in an axial direction.

2. Additional weight for a wheel according to Claim 1, **characterized in that** the first and second loading disks form on at least one of the end faces spacer domes via which the loading disks contact each other in the connected state.

3. Additional weight for a wheel according to either Claim 1 or Claim 2, **characterized in that** the encoding formations in the end faces form a triangular shape.

4. Additional weight for a wheel according to one of Claims 1 to 3, **characterized in that** three encoding formations are provided over the periphery of the end face of a loading disk.

5. Additional weight for a wheel according to one of Claims 1 to 4, **characterized in that** the encoding formations on the end face of a loading disk are constructed partially as recesses and partially as protrusions.

6. Additional weight for a wheel according to one of Claims 1 to 5, **characterized in that** a through-hole extends through the spacer domes.

7. Additional weight for a wheel according to one of Claims 1 to 6, **characterized in that** the first loading disk has a securing hole circle for securing to a wheel flange of the drive axle.

## Revendications

1. Poids additionnel de roue (10) destiné au lestage d'un essieu moteur (30) d'une machine de travail agricole (32), comprenant
un premier disque de charge (12) pouvant être relié de manière centrée avec l'essieu moteur (30) et faisant office d'élément adaptateur,
au moins un deuxième disque de charge (14) pouvant être relié au premier disque de charge (12) en fonction du besoin,
le premier disque de charge (12) possédant une surface d'appui (16) conique servant au pré-positionnement du deuxième disque de charge (14) par rapport au premier disque de charge (16) et
le premier et le deuxième disque de charge (12, 14) formant des façonnages de codage (22) en prise les uns avec les autres et destinés au centrage mutuel sur les faces frontales (18, 20) se faisant face l'une à l'autre dans un état assemblé des disques de charge (12, 14), **caractérisé en ce**
**qu'**au moins l'une des faces frontales (18, 20) d'au moins l'un des disques de charge (12, 14) forme des dômes d'espacement (24) qui, dans l'état assemblé, entrent en contact avec une face frontale (20, 18) de l'autre disque de charge (14, 12) respectif en vue de positionner le premier et le deuxième disque de charge (12, 14) l'un par rapport à l'autre dans le sens axial.

2. Poids additionnel de roue selon la revendication 1, **caractérisé en ce que** le premier et le deuxième disque de charge forment sur au moins l'une des faces frontales des dômes d'espacement par le biais desquels les disques de charge entrent en contact à l'état assemblé.

3. Poids additionnel de roue selon l'une des revendications 1 à 2, **caractérisé en ce que** les façonnages de codage dans les faces frontales forment un triangle.

4. Poids additionnel de roue selon l'une des revendications 1 à 3, **caractérisé en ce que** trois façonnages de codage se trouvant sur le pourtour de la face frontale d'un disque de charge.

5. Poids additionnel de roue selon l'une des revendications 1 à 4, **caractérisé en ce que** les façonnages de codage sur la face frontale d'un disque de charge sont partiellement réalisés sous la forme de cavités et partiellement sous la forme de bossages.

6. Poids additionnel de roue selon l'une des revendications 1 à 5, **caractérisé en ce que** les dômes d'espacement sont contenus par un orifice traversant.

7. Poids additionnel de roue selon l'une des revendications 1 à 6, **caractérisé en ce que** le premier disque de charge possède un cercle de trous de fixation destiné à la fixation à un flasque de roue de l'essieu moteur.
